# EUROPÄISCHE PATENTSCHRIFT

(11) **EP 1 629 217 B1**
(45) Veröffentlichungstag und Bekanntmachung des Hinweises auf die Patenterteilung: **23.08.2006**
(21) Anmeldenummer: 04719407.1
(22) Anmeldetag: 11.03.2004
(51) Int. Cl.: F16D 66/02, B60T 17/22

(54) **BREMSBELAG-VERSCHLEISSANZEIGEGERÄT**
BAKE LINING WEAR INDICATOR
INDICATEUR D'USURE DE GARNITURES DE FREIN

(30) Priorität: 03.06.2003 DE 10325092
(43) Veröffentlichungstag der Anmeldung: 01.03.2006
(73) Patentinhaber: Federal-Mogul Friction Products GmbH, 65520 Bad Camberg (DE)
(72) Erfinder: EMMETT, Robert, A., 56477 Rennerod (DE); STRAUSS, Wilfried, 69483 Wald-Michelbach (DE)
(74) Vertreter: Becker, Eberhard
(86) Internationale Anmeldenummer: PCT/EP2004/002527
(87) Internationale Veröffentlichungsnummer: WO 2004/106766

(56) Entgegenhaltungen:
- EP-A- 0 297 429
- EP-A- 0 307 634
- WO-A-96/23145
- US-A- 5 825 287
- US-B1- 6 411 206
- US-B1- 6 554 108

## Beschreibung

Die vorliegende Erfindung betrifft ein Bremsbelag-Verschleißanzeigegerät gemäß dem Oberbegriff des Anspruchs 1, zur Anzeige des Verschleißes von Bremsbelägen. Ein solches Gerät ist bereits aus der US-A- 5 825 287 bekannt. Derartige Anzeigegeräte gewinnen heutzutage an Bedeutung, da die laufende Funktionsüberwachung der Bremsen im Rahmen der zunehmenden Sicherheitsausstattung von Fahrzeugen eine immer größere Rolle spielt.

Derartige Verschleißanzeigegeräte werden beispielsweise als "brake alert" -Geräte unmittelbar im Kraftfahrzeug eingesetzt und zeigen den funktionshemmenden Verschleiß der überwachten Bremsen durch ein Blinken an.

Es sind jedoch auch Bremsbelag-Verschleißanzeigegeräte bekannt, die im Service und bei der Reparatur von Kraftfahrzeugen in der Werkstatt zum Einsatz kommen. Dabei wird vorzugsweise das Verschleißanzeigegerät an einen bereits bestehenden CWI (Continous Wear Indicator)-Anschluss des Kraftfahrzeuges angeschlossen.

Diese bekannten Bremsüberwachungssysteme lassen jedoch nur eine Erfassung des Summenverschleißes des Innen- und Außenbelags einer Bremse zu und es besteht keine Möglichkeit, eine detaillierte Differentialanalyse bzw. Lokalisierung des Belagverschleißes durchzuführen.

Aufgabe der vorliegenden Erfindung ist daher die Angabe eines Verschleißanzeigegerätes, das eine differenzierte und detaillierte Belagverschleißanzeige ermöglicht.

Diese Aufgabe wird erfindungsgemäß durch ein Bremsbelag-Verschleißanzeigegerät gemäß Anspruch 1 gelöst. Das Gerät hat einen Anschluss für einen externen Verschleißsensor, eine Stromquelle zur Stromversorgung des Verschleißsensors, eine elektronische Verarbeitungseinrichtung, die mit dem Anschluss verbunden ist und mit der elektronischen Verarbeitungseinrichtung verbundene erste und zweite Anzeigeeinrichtungen aufweist, wobei die erste Anzeigeeinrichtung eine kontinuierliche Verschleißanzeige für mindestens einen Belag einer Bremse liefert und die zweite Anzeigeeinrichtung zumindest eine Funktionsanzeige für die Bremse anzeigt. Die erste Anzeigeeinrichtung liefert eine Differenz-Verschleißanzeige für den Differenz-Verschleiß zwischen Innenbelag und Ausβenbelag.

Mit der Erfindung wird somit eine erste Anzeigeeinrichtung zur kontinuierlichen Beurteilung des Differenz-Belagverschleißes geliefert sowie eine zweite Anzeigeeinrichtung, die die Funktion der Bremse anzeigt. Mit der kontinuierlichen Anzeige lässt sich der Differenz-Verschleiß vom Benutzer optisch laufend beurteilen. Die mit der zweiten Anzeigeeinrichtung gelieferte Funktionsanzeige dagegen liefert eine Anzeige der bestehenden ordnungsgemäßen Funktion beziehungsweise des Ausfalls der Bremse und kann daher den Benutzer unverzüglich auf einen Ausfall der Funktion aufmerksam machen.

Erfindungsgemäß liefert die erste Anzeigeeinrichtung kontinuierliche Verschleißanzeigen jeweils für den Innenbelag und den Außenbelag der Bremse, sodass eine Differentialdiagnose des Belagverschleißes ermöglicht wird.

Alternativ ist es bevorzugt, dass die erste Anzeigeeinrichtung eine kontinuierliche Verschleißanzeige für eine Trommelbremse liefert.

Es ist ferner bevorzugt, dass die erste Anzeigeeinrichtung eine kontinuierliche Summenverschleißanzeige für die Summe des Verschleißes des Innenbelags und des Außenbelags der Bremse aufweist. Damit kann auch der bislang ausschließlich verfügbare Summenverschleiß weiterhin optisch beurteilt werden.

Ferner ist bevorzugt, dass die zweite Anzeigeeinrichtung eine Funktionsanzeige für die Feststellbremse aufweist. Mit der Funktionsanzeige für die Feststellbremse kann die ordnungsgemäße Funktion beziehungsweise der Ausfall der Feststellbremse im Betriebszustand angezeigt werden. Die Anzeige erfolgt über eine Massekontakt zwischen Bremse und Bremsscheibe.

Ferner ist bevorzugt eine Funktionsanzeige für die Bremsennachstellung vorgesehen, die den Bedarf der Nachstellung der Bremse anzeigt. Auch diese Anzeige liefert neben der kontinuierlichen Kontrolle eine sofortige Service-Bedarfsanzeige.

Ferner ist vorgesehen eine Funktionsanzeige für einen Bremsenfehler. Diese Funktionsanzeige soll den Ausfall oder die Fehlerhaftigkeit der Bremse unverzüglich anzeigen, sodass der Benutzer sofort Maßnahmen einleiten kann.

Ferner ist bevorzugt, dass alle Komponenten des Verschleißanzeigegeräte in einem Gehäuse untergebracht sind. Die Funktionsanzeigen "Nachstellung" und "Fehler" liefern dabei eine wirkungsvolle Auswertung der kontinuierlichen Anzeigen. Die Auswertung geschieht in der elektronischen Verarbeitungseinrichtung in einer Festverdrahtung oder mit Software.

Ferner ist bevorzugt, dass das Gerät eine erste Funktionstaste für den Abruf der verschiedenen Anzeigen der ersten Anzeigeeinrichtung aufweist. Damit werden die verschiedenen kontinuierlichen Anzeigen betätigt und abgerufen. Die erste Funktionstaste ist mit der elektronischen Verarbeitungseinrichtung verbunden.

Bevorzugt ist eine zweite Funktionstaste für den Abruf der Anzeigen der zweiten Anzeigeeinrichtung vorgesehen. Die zweite Funktionstaste ermöglicht somit den Abruf und die Betätigung der verschiedenen Funktionsanzeigen der zweiten Anzeigeeinrichtung.

Schließlich ist eine Differenz-Verschleißanzeige bevorzugt vorgesehen, die den Differenzverschleiß zwischen dem Innenbelag und dem Außenbelag anzeigt.

Ein im Rahmen der CWI (Continuous Wear Indicator)-Steuerung bekannter Sensor ist aus der EP 1270983 A1 bekannt, der auf dieselbe Anmelderin zurückgeht. Die Messung des Bremsenverschleißes erfolgt hier beispielsweise über eine gewickelte Metallfolie, deren Widerstand sich mit dem Verschleiß ändert und gemessen wird.

Die Erfindung ist als separates Gerät im Werkstatt-Service geeignet. Sie ist aber auch als zusätzliche Erfassungseinrichtung zur Ergänzung eines "brake alert" -Gerätes gedacht, das im Kraftfahrzeug selbst montiert ist.

Weitere Vorteile, Merkmale und Anwendungsmöglichkeiten der vorliegenden Erfindung ergeben sich aus der nachstehenden Beschreibung eines Ausführungsbeispieles in Verbindung mit der Zeichnung.

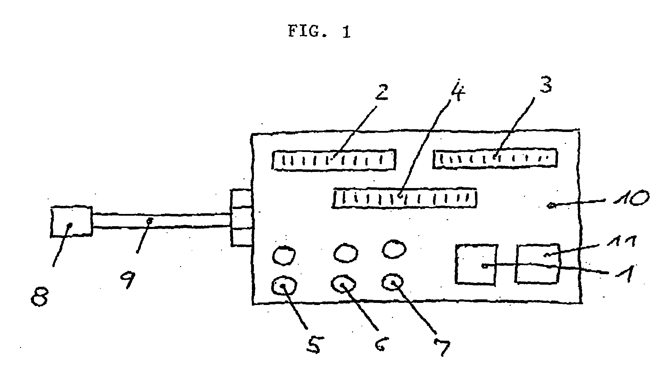

Figur 1 ist ein Funktionsdiagramm einer Ausführungsform eines erfindungsgemäßen Bremsbelag-Verschleißanzeigegerätes.

Das in Figur 1 dargestellte Bremsbelag-Verschleißanzeigegerät hat einen Anschluss 8 für einen externen Verschleißsensor, der im (nicht gezeigten) Automobil angebracht ist und über eine Verbindungsleitung an den Anschluss 8 angeschlossen werden kann. Der Anschluss ist als Steckeranschluss (CWI) ausgebildet und mit einem Kabel 9 in ein Gehäuse 10 des Gerätes geführt. Das Gehäuse 10 beherbergt eine (nicht gezeigte) Stromquelle, in der Regel eine Batterie, mit der die erforderliche Spannung von 5 Volt auf den Anschluss 8 und somit auf den Verschleißsensor zur Messung übertragen wird. Ferner enthält das Gerät eine elektronische Verarbeitungseinrichtung, die geeignet ist, aus dem von dem Verschleißsensor gelieferten Messsignal die im Einzelnen benötigten Anzeigesignale zu extrahieren.

Es ist eine erste Anzeigeeinrichtung vorgesehen, welche eine kontinuierliche Verschleißanzeige 2 für den Innenbelag der angeschlossenen Bremse aufweist. Ferner weist die erste Anzeigeeinrichtung eine kontinuierliche Verschleißanzeige 3 für den Außenbelag der Bremse auf. Schließlich weist die erste Anzeigeeinrichtung eine Summenverschleißanzeige 4 für den Summenverschleiß des Innenbelags und des Außenbelags auf. Die drei Anzeigen der ersten Anzeigeeinrichtung sind als Skalenanzeigen mit Zeiger oder als zuschaltbare Segement-LED-Anzeige ausgebildet, die eine unmittelbare optische Beurteilung des Verschleißes ermöglichen.

Ferner sind im Gerät Funktionsanzeigen einer zweiten Anzeigeeinrichtung untergebracht. Es besteht eine Funktionsanzeige 5 für eine Feststellbremse, die zwei Zustände aufweist. Der eine Zustand bedeutet die ordnungsgemäße Funktion der Feststellbremse, der andere Zustand den Ausfall beziehungsweise das Versagen der Feststellbremse. Die Erfassung der Funktion der Feststellbremse erfolgt über einen Massekontakt zwischen Bremse und Bremsscheibe. Eine weitere Anzeige 6 ist vorgesehen für die Nachstellfunktion der Bremse. Auch diese Anzeige 6 hat zwei Anzeigezustände, die die unmittelbare Notwendigkeit der Bremsennachstellung oder deren ordnungsgemäße Funktion ohne Nachstellung anzeigen. Schließlich ist eine Funktionsanzeige 7 für einen Bremsenfehler vorgesehen, die ebenfalls zwei Anzeigezustände aufweist.

Ferner ist eine erste Funktionstaste 1 gezeigt, die mit der elektronischen Verarbeitungseinrichtung verbunden ist und die Betätigung der Anzeigen 2,3,4 ermöglicht. Durch Betätigung der Funktionstaste 1 kann somit für einen Bremsensatz der Verschleiß des Innenbelags durch die Anzeige 2, der Verschleiß des Außenbelags durch die Anzeige 3 und der Summenverschleiß durch die Anzeige 4 eingeschaltet und beurteilt werden.

Das erfindungsgemäße Bremsbelag-Verschleißanzeigegerät ist somit geeignet, den Verschleiß pro Belag, den Summenverschleiß, den Differenzverschleiß, die Funktion der Feststellbremse, die Funktion einer Nachstellungsüberwachung sowie einen Bremsenfehler geeignet anzuzeigen.

Damit ist die Erfindung geeignet, im Kraftfahrzeug oder im Service als separates Gerät zur Bremsenfunktionsprüfung eingesetzt zu werden.

## Patentansprüche

1. Bremsbelag-Verschleißanzeigegerät mit einem Anschluss (8) für einen externen Verschleißsensor, einer Stromquelle zur Stromversorgung des Verschleißsensors, einer elektronischen Verarbeitungseinrichtung, die mit dem Anschluss (8) verbunden ist, und einer mit der elektronischen Verarbeitungseinrichtung verbundenen ersten und zweiten Anzeigeeinrichtung (2,3,4; 5,6,7), wobei die erste Anzeigeeinrichtung (2,3,4) eine kontinuierliche Verschleißanzeige für mindestens einen Belag einer Bremse aufweist und die zweite Anzeigeeinrichtung (5,6,7) zumindest eine Funktionsanzeige für die Bremse aufweist, **dadurch gekennzeichnet, dass** die erste Anzeigeeinrichtung (2,3) kontinuierliche Verschleißanzeigen für einen Innenbelag und für einen Außenbelag aufweist, und die erste Anzeigeeinrichtung (4) eine kontinuierliche Differenz-Verschleißanzeige aufweist, die den Differenzverschleiß zwischen dem Innenbelag und dem Außenbelag anzeigt.

2. Bremsbelag-Verschleißanzeigegerät gemäß Anspruch 1, **dadurch gekennzeichnet, dass** die erste Anzeigeeinrichtung (2) eine kontinuierliche Verschleißanzeige für eine Trommelbremse aufweist.

3. Bremsbelag-Verschleißanzeigegerät gemäß einem der vorhergehenden Ansprüche, **dadurch gekennzeichnet, dass** die erste Anzeigeeinrichtung (4) eine kontinuierliche Summenverschleißanzeige für die Summe des Verschleißes des Innenbelags und des Außenbelags aufweist.

4. Bremsbelag-Verschleißanzeigegerät gemäß einem der vorhergehenden Ansprüchen, **dadurch gekennzeichnet, dass** die zweite Anzeigeeinrichtung (5) eine Funktionsanzeige für eine Feststellbremse aufweist.

5. Bremsbelag-Verschleißanzeigegerät gemäß einem der vorhergehenden Ansprüche, **dadurch gekennzeichnet, dass** die zweite Anzeigeeinrichtung (6) eine Funktionsanzeige für eine Bremsennachstellung aufweist.

6. Bremsbelag-Verschleißanzeigegerät gemäß einem der vorhergehenden Ansprüche, **dadurch gekennzeichnet, dass** die zweite Anzeigeeinrichtung (7) eine Funktionsanzeige für einen Bremsenfehler aufweist.

7. Bremsbelag-Verschleißanzeigegerät gemäß einem der vorhergehenden Ansprüche, **dadurch gekennzeichnet, dass** es in einem Gehäuse (10) untergebracht ist.

8. Bremsbelag-Verschleißanzeigegerät gemäß einem der vorhergehenden Ansprüche, **dadurch gekennzeichnet, dass** es eine erste Funktionstaste (1) für die Bestätigung bzw. den Abruf der Anzeigen der ersten Anzeigeeinrichtung (2,3,4) aufweist, wobei die erste Funktionstaste (1) mit der elektronischen Verarbeitungseinrichtung verbunden ist.

9. Bremsbelag-Verschleißanzeigegerät gemäß einem der vorhergehenden Ansprüche, **dadurch gekennzeichnet, dass** es eine zweite Funktionstaste (11) für die Betätigung bzw. den Abruf der Anzeigen der zweiten Anzeigeeinrichtung (5,6,7) aufweist, wobei die zweite Funktionstaste (11) mit der elektronischen Verarbeitungseinrichtung verbunden ist.

10. Bremsbelag-VerschleiBanzeigegerät gemäß einem der vorhergehenden Ansprüche, **dadurch gekennzeichnet, daß** die Anzeigen der ersten Anzeigeeinrichtung (2,3,4) und/ oder die Anzeigen der zweiten Anzeigeeinrichtung (5,6,7) gleichzeitig betätigbar sind bzw. gleichzeitig anzeigen.

## Claims

1. Brake lining wear indicator with a connector (8) for an external wear sensor, a power source for supplying the wear sensor with electricity, an electronic processing unit which is linked to the connector (8) and a first and second indicator unit (2, 3, 4; 5, 6, 7) linked to the electronic processing unit, whereby the first indicator unit (2, 3, 4) has a continuous wear display for at least one lining of a brake and the second indicator unit (5, 6, 7) indicates at least one function display for the brake, **characterised in that** the first indicator unit (2, 3) has continuous wear displays for an inner lining and for an outer lining, and the first indicator unit (4) has a continuous differential wear display which indicates the differential wear between the inner lining and the outer lining.

2. Brake lining wear indicator according to claim 1, **characterised in that** the first indicator unit (2) has a continuous wear display for a drum brake.

3. Brake lining wear indicator according to one of the preceding claims, **characterised in that** the first indicator unit (4) has a continuous total wear display for the total of the wear of the inner lining and of the outer lining.

4. Brake lining wear indicator according to one of the preceding claims, **characterised in that** the second indicator unit (5) has a function key for a handbrake.

5. Brake lining wear indicator according to one of the preceding claims, **characterised in that** the second indicator unit (6) has a function display for a brake adjustment.

6. Brake lining wear indicator according to one of the preceding claims, **characterised in that** the second indicator unit (7) has a function display for a brake fault.

7. Brake lining wear indicator according to one of the preceding claims, **characterised in that** it is accommodated in a housing (10).

8. Brake lining wear indicator according to one of the preceding claims, **characterised in that** it has a first function key (1) for operating or calling up the displays of the first indicator unit (2, 3, 4), whereby the first function key (1) is linked to the electronic processing unit.

9. Brake lining wear indicator according to one of the preceding claims, **characterised in that** it has a second function key (11) for operating or calling up the displays of the second indicator unit (5, 6, 7), whereby the second function key (11) is linked to the electronic processing unit.

10. Brake lining wear indicator according to one of the preceding claims, **characterised in that** the displays of the first indicator unit (2, 3, 4) and/or the displays of the second indicator unit (5, 6, 7) are simultaneously capable of operation or display simultaneously.

## Revendications

1. Indicateur d'usure de garniture de frein comprenant un branchement (8) pour un capteur d'usure externe, une source de courant pour l'alimentation électrique du capteur d'usure, un dispositif de traitement électronique, qui est relié au branchement (8), et un premier et un second dispositifs d'affichage (2, 3, 4 ; 5, 6, 7) reliés au dispositif de traitement électronique, le premier dispositif d'affichage (2, 3, 4) présentant un affichage continu d'usure pour au moins une garniture d'un frein et le second dispositif d'affichage (5, 6, 7) présentant un affichage de fonction pour le frein, **caractérisé en ce que** le premier dispositif d'affichage (2, 3) présente des affichages continus d'usure pour une garniture intérieure ou pour une garniture extérieure, et le premier dispositif d'affichage (4) présentant un affichage continu d'usure différentielle, qui indique l'usure différentielle entre la garniture intérieure et la garniture extérieure.

2. Indicateur d'usure de garniture de frein selon la revendication 1, **caractérisé en ce que** le premier dispositif d'affichage (2) présente un affichage continu d'usure pour un frein à tambour.

3. Indicateur d'usure de garniture de frein selon l'une quelconque des revendications précédentes, **caractérisé en ce que** le premier dispositif d'affichage (4) présente un affichage continu d'usure totale pour la totalité de l'usure de la garniture intérieure et de la garniture extérieure.

4. Indicateur d'usure de garniture de frein selon l'une quelconque des revendications précédentes, **caractérisé en ce que** le second dispositif d'affichage (5) présente un affichage de fonction pour un frein de stationnement.

5. Indicateur d'usure de garniture de frein selon l'une quelconque des revendications précédentes, **caractérisé en ce que** le second dispositif d'affichage (6) présente un affichage de fonction pour un rattrapage du jeu des freins.

6. Indicateur d'usure de garniture de frein selon l'une quelconque des revendications précédentes, **caractérisé en ce que** le second dispositif d'affichage (7) présente un affichage de fonction pour un défaut de frein.

7. Indicateur d'usure de garniture de frein selon l'une quelconque des revendications précédentes, **caractérisé en ce qu'**il est logé dans un boîtier (10).

8. Indicateur d'usure de garniture de frein selon l'une quelconque des revendications précédentes, **caractérisé en ce qu'**il présente une première touche de fonction (1) pour la confirmation ou l'appel des affichages du premier dispositif d'affichage (2, 3, 4), la première touche de fonction (1) étant reliée au dispositif de traitement électronique.

9. Indicateur d'usure de garniture de frein selon l'une quelconque des revendications précédentes, **caractérisé en ce qu'**il présente une seconde touche de fonction (11) pour l'actionnement ou l'appel des affichages du second dispositif d'affichage (5, 6, 7), la seconde touche de fonction (11) étant reliée au dispositif de traitement électronique.

10. Indicateur d'usure de garniture de frein selon l'une quelconque des revendications précédentes, **caractérisé en ce que** les affichages du premier dispositif d'affichage (2, 3, 4) et/ou les affichages du second dispositif d'affichage (5, 6, 7) peuvent être actionnés simultanément et/ou s'affichent simultanément.
